# EUROPEAN PATENT SPECIFICATION

(11) **EP 1 040 747 B1**
(45) Date of publication and mention of the grant of the patent: **23.07.2003**
(21) Application number: 00106765.1
(22) Date of filing: 29.03.2000
(51) Int. Cl.: A01D 46/24

(54) **Comb for picking tool for olive or other similar fruits from the branches of a tree**
Kamm für Pflückgerät von Oliven und dergleichen
Peigne pour outil de cueillette d'olives ou autres fruits similaires

(30) Priority: 29.03.1999 IT BO990040
(43) Date of publication of application: 04.10.2000
(73) Proprietor: Campagnola S.R.L., 40069 Zola Predosa (Bologna) (IT)
(72) Inventor: Ferretti, Vittorio Pio, 40050 Monte S. Pietro (Bologna) (IT)
(74) Representative: Negrini, Elena

(56) References cited:
- FR-A- 2 168 043
- SU-A- 1 831 995
- US-A- 3 727 387
- US-A- 4 202 158
- US-A- 5 099 637

## Description

The present invention relates to the technical field of the tools for picking olives or other similar fruits from the branches of trees, and particularly it relates to a comb for said picking tool.

The known tools for picking andlor to rake up fruits, for instance olives from the trees, are constituted essentially by a pole having on an end at least a comb fit to be inserted among the branches of the trees. The comb is oscillating driven by means of mechanic, pneumatic or any other type, in order to cause the detach of the olives from the branches.

The tools with only one comb mainly have raking effect, while the tools with two combs have a picking effect by means of their oscillatory reciprocal movements.

Besides, there are also known tools with both effects, but they have some problems such as the optimization of the comb tine shapes and/or the balancing of the forces acting onto the tool and the operator.

A first type of known comb is constituted by a series of tines which are small poles with the same length, constant diameter, equidistant displaced and supported by a transversal body.

A second type of known comb have a series of tines of at least two different lengths, with constant diameter in all their length, also equidistant displaced and alternatively supported by a transversal body.

A third type of known comb have a series of tines of different lengths, with constant diameter, fixed to a related series of bushes, reciprocally spaced and supported by a transversal body. Said tines are positioned in a random manner on said bushes in such a way that the comb have an irregular profile.

A fourth type of known comb includes a series of tines of the same length, with a bigger diameter in the lower portion and a smaller diameter in the upper portion. Furthermore they are equidistant displaced and supported by a transversal body. This type of comb, in alternative, can have different distances between the consecutive tines.

Document SU 1 831 995 A discloses a device for picking berries including a comb having a plurality of tines, each of them has two base portions each with an end connected with a body and the remaining end connected with a terminal portion.

The drawback of the mentioned combs is the shape of the related tines. For instance, in order to optimize the insertion of the combs among the tree branches, there are combs provided with tines of different lengths or a comb with longer tines or facing a comb with shorter tines, or in the case using two comb tools. This involves using more die moulds for combs of complex shape, that arises the tool costs on which the combs are applied.

Another drawback of these combs is the strength of the tines; in case the branches of the trees are clamped in the spaces between the tines, these latter can be broken because of forces used to make them free, essentially because said tines are not enough flexible.

Another drawback is that the oscillating motion of the combs transmitted to the olives, which are detached from the branches, the random trajectories cause the olives scattering out of the orthogonal projection of the tree foliage on the ground, which makes the harvest even more difficult.

The main object of the invention is to propose a comb for picking tool for olives or similar fruits, which is easily insertable among the tree branches and is carried out by means of simple and economic moulds.

Another object is to propose tines fit to adjust themselves to the branches in an optimal manner.

Another object is to propose a comb avoiding damages to the tree branches.

A further object is to propose a comb to avoid the olive scattering out of the projection of the tree foliage on the ground.

The characteristics of the invention are highlighted in the following, with particular reference to the following drawing sheets, in which:
- figure 1 shows a front view of the comb of the present invention;
- figure 2A shows an enlarged view of detail A of figure 1;
- figure 2B shows an enlarged side view of the detail A of figure 1;
- figure 3 shows a perspective view of the detail K in figure 2A;
- figure 4 shows a front view of a variant of the comb in figure 1;

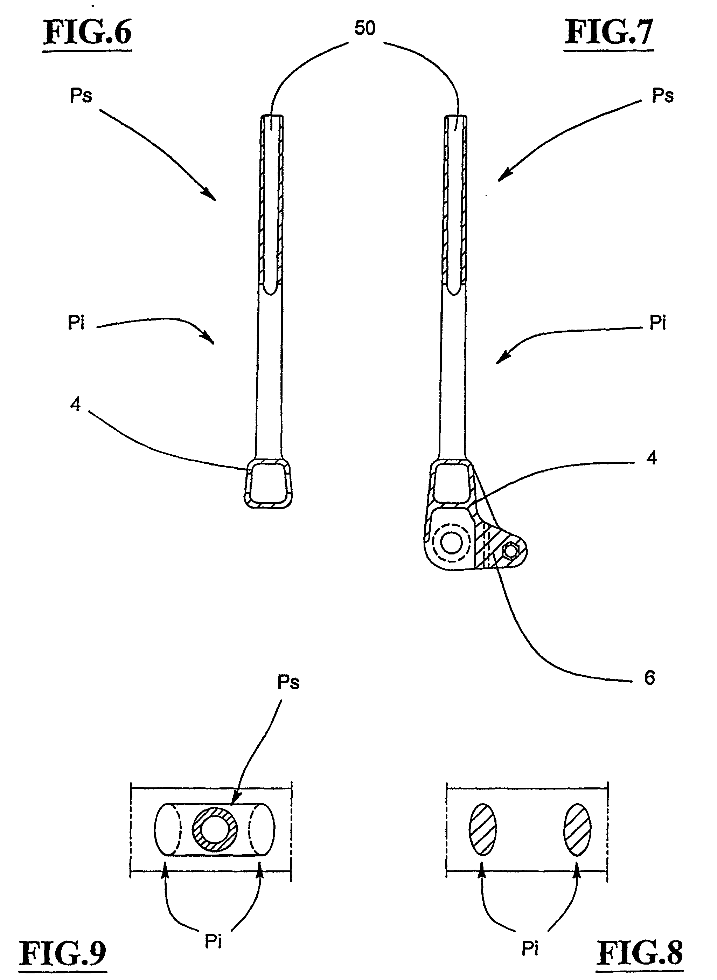

- figure 5 shows a bottom view of the comb of figure 4;
- figure 6 shows a partially sectioned side view of the comb of figure 4;
- figure 7 shows a sectional view on the plane VII-VII of the comb of figure 4;
- figure 8 shows an enlarged sectional view on the plane VIII-VIII of the comb of figure 4;
- figure 9 shows an enlarged sectional view on the plane IX-IX of the comb of figure 4.

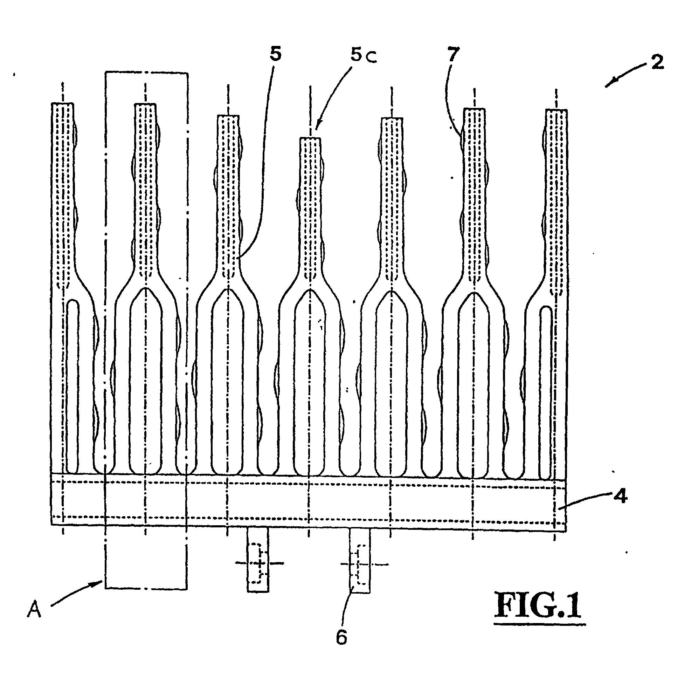

With reference to figures 1 to 3, numeral 2 indicates a comb for a picking tool for olives or other similar fruits from the branches of a tree

The comb 2 consists of stick shaped tines 5, for instance seven, which are coplanar and spaced side by side at equal distance, supported by a transversal tubular body 4, which has in the lower portion, not provided with the tines 5, support elements 6 fit for connecting the comb to the tool not illustrated.

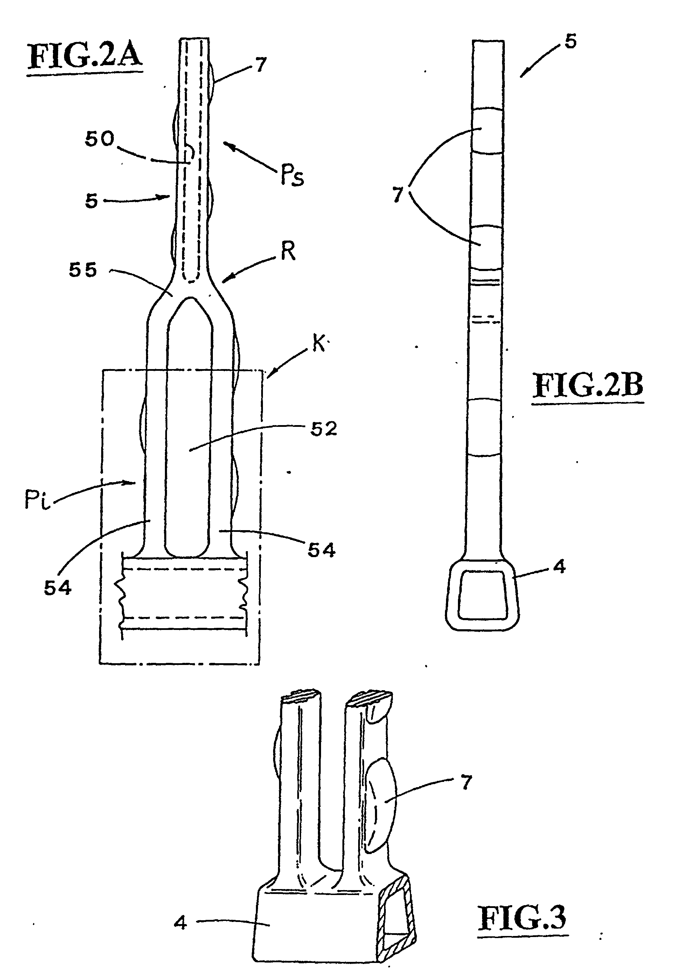

Each tine 5, as shown in figure 2a, includes a couple of base portions Pi, each of them has fixed its one end to the hollow tubular body 4 and a terminal portion Ps having a circular section which is smaller than the section of the oval base portion Pi.

The base portions Pi have a passing hole 52, while the terminal portion Ps has an axial hole 50 communicating outside trough one or both ends.

The tine, having the hole 52, is "Y" shaped, in other words is shaped like a reversed diapason, having in each base portion Pi a first straight segment 54 orthogonal to the body 4 and a second straight segment 55 connecting the terminal portion Ps.

In the preferred embodiment shown in figure 1, the tines have different lengths: those located in the middle of the transversal body 4 are shorter with respect to those located at the ends of the transversal body 4. The tine length decreases down to a minimum associated to the central tine of the comb 2 that is the tine 5c. In other words the free ends of the terminal portions Ps of the tines 5 draw a concave or convex profile.

The tubular body 4 of the comb 2 has at each ends a "h" shaped tine 5 and in between a plurality of "Y." shaped tines.

The vertical walls of each tine 5 are provided with a series of relieves or protrusions 7, integral thereto, which are alternatively distributed on said faced walls, in other words in asymmetrical manner between the faced walls of two adjacent tines.

Each "h" shaped tine 5 has protrusions 7 only on the wall faced to the "Y" shaped tine 5. In particular the left "h" shaped tine in figure 1 is provided with four protrusions 7, two of them are in the terminal portion Ps and the other two are in the base portion Pi, while the right "h" shaped tine has a protrusion 7 in the base portion Pi and two in the terminal portion Ps.

The operational of the comb 2 provides that it is hinged, by means of support elements 6, to an actuator, for instance pneumatic and not shown, which causes the oscillation of the comb.

In an operating condition the comb 2 is inserted among the branches of the trees and, by means of the oscillation, it causes the olive or other fruit fall.

The penetration of the branches into the comb 2 is facilitated by the different lengths of the tines 5, because the outmost tines engage the branches carrying them into the remaining shorter tines.

The particular diapason shape of the tines allow a wide mutual distance in the upper portion thereof and a smaller distance in correspondence of the middle portion till the its base.

These features achieve an easy penetration of the branches between the terminal portion Ps of the tines where the distance is bigger, and then they are conveyed into the base portion where the distance between tines is smaller and where the olive-picking is carried out.

The penetration of the branches into the lower portion of the comb 2 is, besides, facilitated by the special rounding in each tine at the conjunction point R of the two base portions Pi with the terminal portion Ps. Such rounding drives each branch to the minimum distance portion of said tines so avoiding the branch damage, that is the defoliation or the decortication or the break-up thereof.

The passing hole 52 between the base portions Pi of each tine 5 increases the flexibility of the comb, so causing a bigger resistance to the transversal stress of each tine 5.

In such way the tines 5 adjust, by flexing themselves, to the branches with a diameter which is bigger than the distance between the tines reducing the break-up risks of the tines when a branch is clamped between these latter.

The protrusions 7 allow to hold the olives in the lower portions of the tines so facilitating the small olive harvesting, because the space between the adjacent tines is reduced again without interfering with the insertion of the branches into the spaces between the tines.

The angle between each base portion Pi and the connected terminal portion Ps is in the range 120° and 180°. Particularly in the preferred embodiment of figures from 1 to 3, the angle between the second straight segment 55 and the terminal portion Ps, also rectilinear, is around 145°. In the variant of the comb 2 shown in figures from 4 to 9 said angle is around 165°.

The variant of the comb 2 shown in figures from 4 to 9 provides that the transversal body 4 has transversal passing holes 10, for instance lying regularly along the same body, and the free ends of the terminal portions Ps of the tines 5 are aligned.

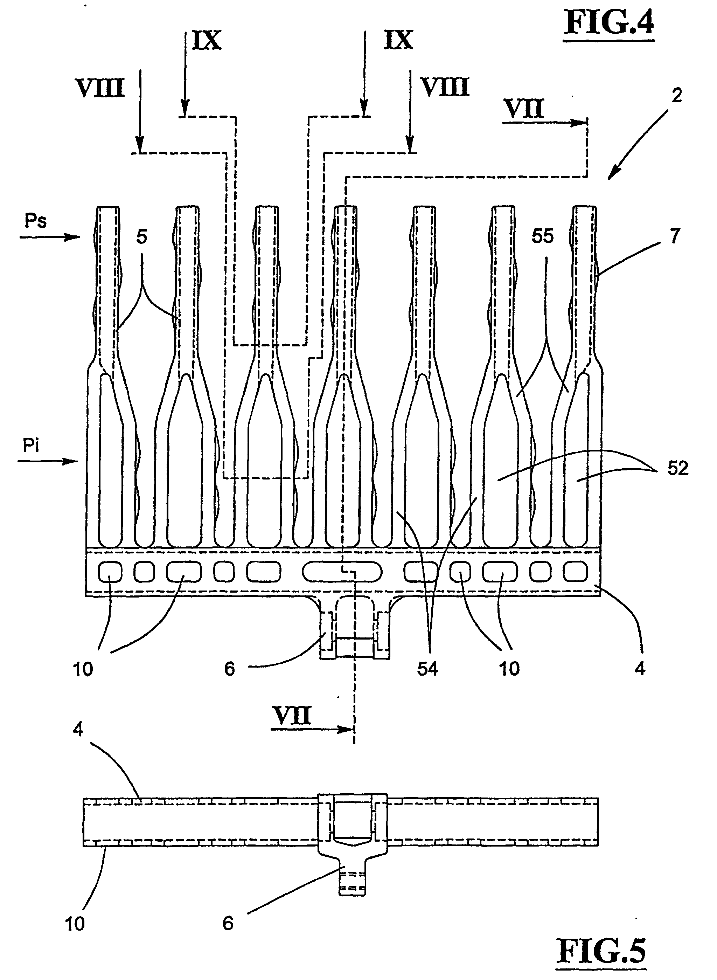

The left "h" shaped tine 5 c in figure 4 has three protrusions 7, two of them are on the external wall and one is on the internal wall of the terminal portion Ps and a pair of protrusions 7 are on the internal wall of the base portion Pi faced to the "Y" shaped tine. The right "h" shaped tine has only one protrusion 7 in the external wall and two at the internal wall of the terminal portion Ps.

Besides, all the "Y" shaped tines have on the left wall two protrusions 7 in the terminal portion Ps and on the right wall one protrusion 7 of this latter portion and two in the right base portion Pi.

In a further variant the protrusions 7 are only on the walls of terminal portion Ps or only on the walls of at least one of the base portion Pi of each tine.

The tines 5 are integral with the transversal tubular body 4 and therefore the comb 2 is carried out in a single mould.

The support elements 6 define a connection position of the picking tool which is offset with regard to the transversal tubular body (4) so that the tines 5 of a first comb 2 of the picking tool are offset compared with the tines 2 of the second comb 2 facing to the first one.

## Claims

1. Comb for picking tool for olives or other similar fruits from the tree branches, the comb including a transversal tubular body (4) having at the lower portion support elements (6) for said tool, and at the upper portion a plurality of tines (5), each of them having two base portions (Pi) each with an end connected with the tubular body (4) and the remaining end connected with a terminal portion (Ps); said comb being **characterized in that** it includes protrusion (7) lying in asymmetrical manner beetween faced walls of two adjacent tines (5).

2. Comb according to claim 1 **characterized in that** said base portions (Pi) and said terminal portion (Ps) are joined in such a way to form a "Y" shaped tine (5).

3. Comb according to claim 1 **characterized in that** said base portions (Pi) and said terminal portion (Ps) are joined so forming a "h" shaped tine (5).

4. Comb according to claim 1 **characterized in that** said terminal portion (Ps) has an axial hole (50).

5. Comb according to claim 1 **characterized in that** said base portions (Pi) have a pass-trough hole (52).

6. Comb according to claim 1 **characterized in that** is provided with at least a "h" shaped tine in correspondence of each end of the tubular body (4) and "Y" shaped tines between said "h" shaped tines.

7. Comb according to claim 1 **characterized in that** said tines (5) are coplanar and placed side by side with equal distance.

8. Comb according to claim 1 **characterized in that** the base portions (Pi) are wider than the terminal portion (Ps).

9. Comb according to claim 8 **characterized in that** said terminal portion (Ps) has a cylindrical section and said base portions (Pi) have substantially oval section.

10. Comb according to claim 1 **characterized in that** the free ends of the terminal portions (Ps) of the tines (5) are on a curved profile.

11. Comb according to claim 1 **characterized in that** said transversal body (4) has some transversal passing holes (10).

12. Comb according to claim 1 **characterized in that** the angle between a base portion (Pi) and the related terminal portion (Ps) is in the range from 120° to 180°.

13. Comb according to claim 1 **characterized in that** the base portion (Pi) consists of a first straight segment (54) orthogonal to the axle of the transversal body (4) and a second straight segment (55) connecting the terminal portion (Ps).

14. Comb according to claim 6 **characterized in that** at least one of the "h" shaped tines (5) has at least one protrusion (7) on the wall facing the "Y" shaped tines (5).

15. Comb according to claim 6 or claim 14 **characterized in that** the "h" shaped tines (5) has at least one protrusion (7) on the external wall of the terminal portion (Ps).

16. Comb according to claim 1 **characterized in that** each tine (5) has the protrusions (7) only on the walls of the terminal portion (Ps) or only on at least one of the base portions (Pi).

17. Comb according to claim 1 **characterized in that** the protrusions (7) are positioned in asymmetrical manner in the terminal portion (Ps) and in only one of the base portions (Pi) of each tine (5).

18. Comb according to claim 1 **characterized in that** the tubular body (4) is hollow.

19. Comb according to claim 1 **characterized in that** the free ends of the terminal portions (Ps) of the tines (5) are lined up.

20. Comb according to claim 1 **characterized in that** the tines (5) are integral with the transversal tubular body (4).

21. Comb according to claim 1 **characterized in that** the support elements (6) define a connecting position for the picking tool offset with regard to the transversal tubular body (4).

## Patentansprüche

1. Kamm für ein Pflückgerät für Oliven oder andere ähnliche Früchte von den Zweigen eines Baums, wobei der Kamm einen quer liegenden rohrförmigen Körper (4) mit Lagerungselementen für das Werkzeug am unteren Abschnitt und mit einer Mehrzahl von Zinken (5) am unteren Abschnitt umfaßt, wobei jede von diesen zwei untere Abschnitte (Pi) jeweils mit einem Ende aufweist, das mit dem rohrförmigen Körper 4 verbunden ist, wobei das verbleibende Ende mit einem Endabschnitt (Ps) verbunden ist, wobei der Kamm **dadurch gekennzeichnet ist, daß** er Vorsprünge (7) aufweist, die asymmetrisch zwischen zueinander weisenden Wänden zweier benachbarter Zinken (5) liegen.

2. Kamm nach Anspruch 1, **dadurch gekennzeichnet, daß** die unteren Abschnitte (Pi) und die Endabschnitte (Ps) solcherart verbunden sind, daß sie eine "Y"förmige Zinke (5) bilden.

3. Kamm nach Anspruch 1, **dadurch gekennzeichnet, daß** die unteren Abschnitte (Pi) und die Endabschnitte (Ps) so verbunden sind, daß sie eine "h"-förmige Zinke (5) bilden.

4. Kamm nach Anspruch 1, **dadurch gekennzeichnet, daß** der Endabschnitt (Ps) ein axiales Loch (50) aufweist.

5. Kamm nach Anspruch 1, **dadurch gekennzeichnet, daß** die unteren Abschnitte (Pi) ein Durchgangsloch (52) aufweisen.

6. Kamm nach Anspruch 1, **dadurch gekennzeichnet, daß** er mit mindestens einer "h"-förmigen Zinke, die sich entsprechend an jedem Ende des rohrförmigen Körpers (4) befindet, und mit "Y"-förmigen Zinken zwischen den "h"-förmigen Zinken versehen ist.

7. Kamm nach Anspruch 1, **dadurch gekennzeichnet, daß** die Zinken (5) koplanar sind und mit gleichem Abstand nebeneinander angeordnet sind.

8. Kamm nach Anspruch 1, **dadurch gekennzeichnet, daß** die unteren Abschnitte (Pi) breiter als die Endabschnitte (Ps) sind.

9. Kamm nach Anspruch 8, **dadurch gekennzeichnet, daß** der Endabschnitt (Ps) einen zylindrischen Querschnitt aufweist und die unteren Abschnitte (Pi) einen im wesentlichen ovalen Querschnitt aufweisen.

10. Kamm nach Anspruch 1, **dadurch gekennzeichnet, daß** sich die freien Enden der unteren Abschnitte (Pi) der Zinken (5) auf einem gebogenen Profil befinden.

11. Kamm nach Anspruch 1, **dadurch gekennzeichnet, daß** der quer liegende Körper (4) einige quer verlaufende Löcher (10) aufweist.

12. Kamm nach Anspruch 1, **dadurch gekennzeichnet, daß** der Winkel zwischen einem unteren Abschnitt (Pi) und dem zugehörigen Endabschnitt (Ps) im Bereich von 120° bis 180° liegt.

13. Kamm nach Anspruch 1, **dadurch gekennzeichnet, daß** der untere Abschnitt (Pi) aus einem ersten geraden Segment (54), das rechtwinkelig zu der Achse des quer liegenden Körpers (4) ist, und einem zweiten geraden Segment (55) besteht, das mit dem Endabschnitt (Ps) verbunden ist.

14. Kamm nach Anspruch 6, **dadurch gekennzeichnet, daß** mindestens eine der "h"-förmigen Zinken (5) mindestens einen Vorsprung (7) an der zu den "Y"förmigen Zinken (5) weisenden Wand aufweist.

15. Kamm nach Anspruch 6 oder Anspruch 14, **dadurch gekennzeichnet, daß** die "h"-förmige Zinke (5) mindestens einen Vorsprung (7) an der Außenwand des Endabschnitts (Ps) aufweist.

16. Kamm nach Anspruch 1, **dadurch gekennzeichnet, daß** jede Zinke (5) die Vorsprünge (7) nur an den Wänden des Endabschnitts (Ps) oder nur an mindestens einem von den unteren Abschnitten (Pi) aufweist.

17. Kamm nach Anspruch 1, **dadurch gekennzeichnet, daß** die Vorsprünge (7) asymmetrisch angeordnet und in nur einem von den unteren Abschnitten (Pi) jeder Zinke (5) positioniert sind.

18. Kamm nach Anspruch 1, **dadurch gekennzeichnet, daß** der rohrförmige Körper (4) hohl ist.

19. Kamm nach Anspruch 1, **dadurch gekennzeichnet, daß** die freien Enden der Endabschnitte (Ps) der Zinken (5) aufgereiht sind.

20. Kamm nach Anspruch 1, **dadurch gekennzeichnet, daß** die Zinken (5) einstückig mit dem quer liegenden rohrförmigen Körper (4) ausgebildet sind.

21. Kamm nach Anspruch 1, **dadurch gekennzeichnet, daß** die Lagerungselemente (6) eine Verbindungsstelle für das in bezug auf den quer liegenden rohrförmigen Körper (4) versetzte Pflückwerkzeug bilden.

## Revendications

1. Peigne pour outil de cueillette servant à cueillir les olives et autres fruits analogues sur les branches des arbres, le peigne comprenant un corps tubulaire transversal (4) ayant, à la partie inférieure, des éléments de support (6) pour ledit outil et, à la partie supérieure, une pluralité de dents (5) dont chacune possède deux parties de base (Pi) présentant chacune une extrémité reliée au corps tubulaire (4) et l'extrémité restante reliée à une partie terminale (Ps); ledit peigne étant **caractérisé en ce qu'**il comprend une protubérance (7) qui se trouve de façon asymétrique entre des parois opposées face à face de deux dents (5) adjacentes.

2. Peigne selon la revendication 1, **caractérisé en ce que** lesdites parties de base (Pi) et ladite partie terminale (Ps) sont réunies de manière à former une dent (5) en forme de « Y ».

3. Peigne selon la revendication 1, **caractérisé en ce que** lesdites parties de base (Pi) et ladite partie terminale (Ps) sont réunies de façon à former une dent (5) en forme de « h ».

4. Peigne selon la revendication 1, **caractérisé en ce que** ladite partie terminale (Ps) possède un trou axial (50).

5. Peigne selon la revendication 1, **caractérisé en ce que** lesdites parties de base (Pi) présentent un trou traversant (52).

6. Peigne selon la revendication 1, **caractérisé en ce qu'**il est muni d'au moins une dent en forme de « h » au droit de chaque extrémité du corps tubulaire (4) et des dents en forme de « Y» entre lesdites dents en forme de « h ».

7. Peigne selon la revendication 1, **caractérisé en ce que** lesdites dents (5) sont coplanaires et placées côte à côte à égale distance l'une de l'autre.

8. Peigne selon la revendication 1, **caractérisé en ce que** les parties de base (Pi) sont plus larges que la partie terminale (Ps).

9. Peigne selon la revendication 8, **caractérisé en ce que** ladite partie terminale (Ps) a une section cylindrique et lesdites parties de base (Pi) ont une section pratiquement ovale.

10. Peigne selon la revendication 1, **caractérisé en ce que** les extrémités libres des parties terminales (Ps) des dents (5) se trouvent sur un profil courbe.

11. Peigne selon la revendication 1, **caractérisé en ce que** ledit corps transversal (4) présente des trous traversant transversaux (10).

12. Peigne selon la revendication 1, **caractérisé en ce que** l'angle entre une partie de base (Pi) et la partie terminale (Ps) correspondante est dans l'intervalle compris entre 120 ° et 180 °.

13. Peigne selon la revendication 1, **caractérisé en ce que** la partie de base (Pi) est composée d'un premier segment droit (54) orthogonal à l'axe du corps transversal (4) et d'un deuxième segment droit (55) qui est relié à la partie terminale (Ps).

14. Peigne selon la revendication 6, **caractérisé en ce qu'**au moins une des dents (5) en forme de « h » présente au moins une protubérance (7) sur la paroi qui fait face aux dents en forme de « Y » (5).

15. Peigne selon la revendication 6 ou 14, **caractérisé en ce que** les dents (5) en forme de « h » possèdent au moins une protubérance (7) sur la paroi extérieure de la partie terminale (Ps).

16. Peigne selon la revendication 1, **caractérisé en ce que** chaque dent (5) présente les protubérances (7) seulement sur les parois de la partie terminale (Ps) ou seulement sur au moins une des parties de base (Pi).

17. Peigne selon la revendication 1, **caractérisé en ce que** les protubérances (7) sont positionnées de façon asymétrique à la partie terminale (Ps) et dans seulement une des parties de base (Pi) de chaque dent (5).

18. Peigne selon la revendication 1, **caractérisé en ce que** le corps tubulaire (4) est creux.

19. Peigne selon la revendication 1, **caractérisé en ce que** les extrémités libres des parties terminales (Ps) des dents (5) sont alignées.

20. Peigne selon la revendication 1, **caractérisé en ce que** les dents (5) sont en une seule pièce avec le corps tubulaire transversal (4).

21. Peigne selon la revendication 1, **caractérisé en ce que** les éléments de support (6) définissent une partie de liaison pour l'outil de cueillette qui est décalée par rapport au corps tubulaire transversal (4).
